# NEUE EUROPÄISCHE PATENTSCHRIFT

(11) **EP 0 175 388 B2**
(45) Veröffentlichungstag und Bekanntmachung des Hinweises auf die Entscheidung über den Einspruch: **16.02.1994**
(45) Hinweis auf die Patenterteilung: 13.06.1990
(21) Anmeldenummer: 85111960.2
(22) Anmeldetag: 20.09.1985
(51) Int. Cl.: A01C 17/00

(54) **Anbauschleuderstreuer und Verfahren zur Herstellung eines Anbauschleuderers**
Mounted broadcaster and process for manufacturing a mounted broadcaster
Distributeur à disque centrifuge et procédé de fabrication d'un distributeur à disque centrifuge

(30) Priorität: 21.09.1984 DE 3434688
(43) Veröffentlichungstag der Anmeldung: 26.03.1986
(73) Patentinhaber: Amazonen-Werke H. Dreyer GmbH & Co. KG, D-49202 Hasbergen (DE)
(72) Erfinder: Dreyer, Heinz, Dr., D-4507 Hasbergen (DE)
(74) Vertreter: Grünecker, Kinkeldey, Stockmair & Schwanhäusser Anwaltssozietät

(56) Entgegenhaltungen:
- EP-A- 0 117 005
- DE-A- 1 557 909
- FR-A- 2 091 214
- GB-A- 890 711
- GB-A- 890 713
- GB-A- 1 292 879
- GB-A- 1 493 525
- GB-A- 1 577 028
- GB-A- 2 029 185
- US-A- 3 738 546
- Prospekt Amazone ZA-U D508 4.84
- Dubbels Taschenbuch für den Maschinenbau, Seiten 652-653

## Beschreibung

Die Erfindung betrifft einen Anbauschleuderstreuer, nach dem Oberbegriff des Anspruchs 2

Außerdem betrifft die Erfindung ein Verfahren nach dem Oberbegriff des Anspruchs 1

Ein derartiger Anbauschleuderstreuer ist durch den Prospekt "Amazone ZA-U D508* 4.84" bekannt geworden. Der Vorratsbehälter dieses bekannten Anbauschleuderstreuers weist zwei nebeneinander angeordnete Dosier- und Baueinheiten auf, deren Betätigungselemente als Hydraulikzylinder mit Zugfedern ausgebildet sind. Jede Bodenplatte ist mit zwei Schrauben auf der beim Schlepperanbau dem Schlepper zugewandten Vorderseite an einer an dem Vorratsbehälter festgeschweißten Platte angeschraubt und auf der Rückseite zusätzlich mit zwei Krallen an dieser festgeschweißten Platte gehalten. Nachteilig ist bei diesem Anbauschleuderstreuer, daß jede Bodenplatte mit dem Schieber und dem Betätigungselement nur in mühseliger und schwer zugänglicher Weise vom Vorratsbehälter abgenommen und wieder angebracht werden kann. Hierbei müssen die Schraubverbindungen, mit denen die Bodenplatte unter dem Vorratsbehälter befestigt ist, mit Hilfe von Werkzeugen gelöst werden. Vielfach sind auch der Hydraulikzylinder und die Zugfeder zu demontieren. Aufgrund dieser Tatsache unterläßt es der Benutzer der Maschine, wie die Praxis gezeigt hat, die Bodenplatten mit den Schiebern und den Betätigungselementen zum Zwecke der Wartung und Reinigung abzunehmen. Dies führt jedoch zu ungenauer Dosierung und hohem Verschleiß der Dosier- und Baueinheit, da das auszustreuende Düngemittel stark hygroskopisch ist und sich deshalb schon nach kurzer Betriebszeit als harte Schicht an der Bodenplatte und dem Schieber sowie innerhalb der Auslauföffnung, deren öffnungsweite im Laufe der Zeit immer weiter verringernd, anlagert. Dadurch wird die Betätigung des Schiebers errschwert, so daß hoher Verschleiß auftritt, sowie das Düngemittel mit abnehmender Genauigkeit der Dosierung ausgestreut. Darüber hinaus sind die auszustreuenden Düngemittel sehr aggressiv, so daß insbesondere die Bodenplatte und der Schieber schon nach relativ kurzer Betriebszeit bereits Korrosionserscheinungen aufweisen, die die Funktionsfähigkeit der dosier- und Baueinheit beeinträchtigen.

Darüber hinaus muß bei diesem Düngerstreuer jedesmal, wenn die Baueinheit wieder am Vorratsbehälter befestigt wird, eine entsprechende Justierung vorgenommen werden, da sich nach jedem Abbau der Baueinheit und erneutem Anbau unterschiedliche Streubilder, d.h. also ein unterschiedliches Streuverhalten, ergibt.

Aus der GB-A-2 029 185 ist ein Anbauschleuderstreuer bekannt, bei dem die Bodenplatte, der Schieber und das Betätigungselement keine Baueinheit bilden. Diese Teile müssen daher einzeln am Vorratsbehälter angeordnet werden.

Ausgehend von einem Anbauschleuderstreuer der eingangs genannten Art liegt der Erfindung die Aufgabe zugrunde, daß die aus Bodenplatte, Schieber und Betätigungselement bestehende Dosier- und Baueinheit in bequemer Weise schnell und einfach gewartet, gereinigt bzw. ausgetauscht werden kann, wobei nach jedem Zusammenbau eine exakt gleichbleibende Ausrichtlage zwischen der Baueinheit und dem Vorratsbehälter immer wieder sichergestellt sein soll.

Diese Aufgabe wird erfindungsgemäß dadurch gelöst, daß die Dosier- und Baueinheit in ihrer Gesamtheit leicht lösbar, leicht abnehmbar und leicht wieder anbringbar ist und daß ein zwischen der Dosier- und Baueinheit und dem Vorratsbehälter wirkendes Zentrierelement vorgesehen ist.

Infolge dieser Maßnahme kann der Landwirt in einfacher, schneller und bequemer Weise die Dosier- und Baueinheit vom Vorratsbehälter abnehmen und vor allem die Bodenplatte und den Schieber, insbesondere deren aufeinander zugewandten Flächen nach dem Einsatz der Maschine reinigen und ölen. Somit wird es dem Landwirt äußerst einfach gemacht, die Dosierund Baueinheit abzunehmen, um sie zu warten und zu pflegen, so daß die Maschine auch nach vieljähriger Einsatzzeit eine genau dosierende Dosier- und Baueinheit aufweist. Das Auswechseln verschlissener Teile und die Montage bei der Herstellung der Maschine ist darüber hinaus wesentlich vereinfacht. Durch die Zentrierung der Baueinheit bezüglich des Vorratsbehälters mit Hilfe eines Zentrierelementes wird sichergestellt, daß die Baueinheit immer, also nach jedem Abbau- und Anbauvorgang, diejenige Lage innehat, auf die sie einjustiert wurde. Der Justiervorgang wird bei der Montage beim Hersteller durchgeführt, wobei die Baueinheit bezüglich des Vorratsbehälters, insbesondere die Bodenplatte gegenüber einer am Vorratsbehälter angebrachten Kuppelplatte, exakt ausgerichtet wird. Nach dieser Ausrichtung wird das Zentrierelement dann fixiert, beispielsweise angeschweißt, so daß diese vorgegebene gegenseitige Lage von Kuppelplatte und Bodenplatte, d.h., Vorratsbehälteröffnung zur Dosier- und Baueinheit, automatisch beim Anbau nach einer Reinigung eingenommen wird.

Vorteilhafterweise umfaßt die Verbindungseinrichtung, mit der die Bodenplatte am Vorratsbehälter befestigt ist, eine die Bodenplatte durchsetzende Sicherungsanordnung, die an wenigstens einer frei zugänglichen Seite des Vorratsbehälters bei Anbau an einen Schlepper angeordnet ist. Es ist aber auch möglich, eine Verbindungseinrichtung einzusetzen, die eine am Vorratsbehälter befestigte, die Bodenplatte an deren Rand umgreifende Halterungsanordnung umfaßt. Die Bodenplatte kann in diesem Fall beispielsweise in die Halterungsanordnung, wenn diese an gegenüberliegenden Seiten des Vorratsbehälters angeordnet ist, von der Seite her in einfacher Weise eingeschoben oder herausgezogen werden. Natürlich ist es auch möglich, eine Verbindungseinrichtung zu verwenden, die eine an der Bodenplatte befestigte, den Rand einer Kuppelplatte des Vorratsbehälters umgreifende Halterungsanordnung umfaßt.

Gemäß einer Weiterbildung der Erfindung werden sowohl die Sicherungs- als auch die Halterungsanordnung zur Befestigung der Bodenplatte und damit der Dosier- und Baueinheit am Vorratsbehälter verwendet. Hierbei weist zwecks leichter Zugänglichkeit die Sicherungsanordnung auf der der Dreipunktkupplungsseite abgewandten Seite des Vorratsbehälters wenigstens eine an diesen anschraubbare Schraube und die Halterungsanordnung auf der gegenüberliegenden Seite des Vorratsbehälters angeordnete Krallen auf.

In den Fällen, in denen der Vorratsbehälter bei Anbau der Maschine an einen Schlepper auch von der Dreipunktkupplungsseite her leicht zugänglich ist, ist eine Anordnung möglich, bei der die Sicherungsanordnung auf der Dreipunktkupplungsseite des Vorratsbehälters wenigstens eine an diesen anschraubbare Schraube und die Halterungsanordnung auf der gegenüberliegenden Seite des Vorratsbehälters angeordnete Krallen aufweist.

Zur beschleunigten Demontage oder Montage der Bodenplatte ist die Sicherungsanordnung vorteilhafterweise in Form von Schnellverschlüssen, beispielsweise in Form von Flügelschrauben, ausgebildet.

Vorzugsweise ist das Betätigungselement als ein an der Bodenplatte befestigter fernbedienbarer Hubzylinder mit einer Übertragungsleitung für das Betätigungsmedium ausgebildet. Damit ist die Voraussetzung geschaffen, die Dosier- und Baueinheit vom Vorratsbehälter abzunehmen oder an diesen anzubringen, ohne daß dabei, wie im Falle einer mechanischen Anordnung, das Betätigungselement in zeitraubender Weise an eine mechanische Übertragungseinrichtung, wie beispielsweise eine Hebelanordnung, zu befestigen oder von dieser zu lösen ist. Beispielsweise kann der Hubzylinder eine Kupplung aufweisen, mittels der er an die Übertragungsleitung leicht trennbar angeschlossen ist. Bei flexibler Ausbildung wenigstens des dem Hubzylinder benachbarten Teilstücks der Übertragungsleitung kann eine solche Kupplung entfallen. Der Hubzylinder ist vorteilhafterweise als elektrischer Hubmotor oder als hydraulischer Hubzylinder ausgebildet.

Allseitiger Zugang zu den zu wartenden Teilen und deren besonders einfach durchzuführende Wartung kann durch lösbare Befestigung des Schiebers und des Betätigungselementes an der Bodenplatte erreicht werden. Hierbei ist der Hubzylinder vorteilhafterweise zwischen einem an der Bodenplatte abstehenden Tragarm und einem den Schieber jenseits eines Drehgelenkes verlängernden Hebel angeordnet. Bei Anbauschleuderstreuern mit einem an de Bodenplatte angeordneten einstellbaren Anschlagelement für den Schieber ist das Anschlagelement ebenfalls vorteilhafterweise lösbar an der Bodenplatte befestigt.

Gemäß einer Weiterbildung der Erfindung besteht die Bodenplatte aus einer Abdeckplatte mit einer Auslaßöffnung und einer Tragplatte mit einer Durchlaßöffnung, wobei der Schieber und das Betätigungselement an der Tragplatte angeordnet sind. Dies bietet die Möglichkeit, die Abdeckplatte und den Schieber aus nichtrostendem Material herzustellen, das aufgrund seiner größeren Widerstandsfähigkeit gegenüber den aggressiven Düngemitteln weniger korrodiert und somit zu einer vereinfachten Wartung führt. Gleichzeitig ergibt sich eine kostengünstige Ausführung, wenn die Tragplatte aus einfachem und billigem Materal hergestellt wird. Zur besonders einfachen Montage und Demontage ist die Abdeckplatte unterhalb der Tragplatte und der an der Tragplatte befestigte Schieber unterhalb der Abdeckplatte angeordnet.

Bei einem Anbauschleuderstreuer mit einer in den Vorratsbehälter hineinragenden Antriebswelle der Streueinrichtung wird die schnelle Montage und Demontage dadurch sichergestellt, daß die Bodenplatte einen seitlich offenen Ausschnitt für die Antriebswelle der Streueinrichtung aufweist.

Nachstehend ist die Erfindung anhand dreier Ausführungsbeispiele unter Bezugnahme auf die Zeichnung näher beschrieben. Hierbei zeigen
Fig. 1 ein erstes Ausführungsbeispiel eines erfindungsgemäßen Anbauschleuderstreuers in der Rückansicht,
Fig. 2 die linke Dosier- und Baueinheit des Schleuderstreuers gemäß Fig. 1 in vergrößertem Maßstab, wobei die Bodenplatte aus einer Abdeckplatte und einer Tragplatte besteht,
Fig. 3 den Schleuderstreuer gemäß Fig. 1 in der Draufsicht,
Fig. 4 ein an den Vorratsbehälter des Schleuderstreuers gemäß Fig. 1 befestigte Kuppelplatte in der Draufsicht,
Fig. 5 die Tragplatte nach Fig. 2 mit einem Schieber und einem Betätigungselement in der Draufsicht,
Fig. 6 die Abdeckplatte nach Fig. 2 in der Draufsicht,
Fig. 7 ein zweites Ausführungsbeispiel eines erfindungsgemäßen Anbauschleuderstreuers in der Rückansicht,
Fig. 8 eine an den Vorratsbehälter des Schleuderstreuers gemäß Fig. 7 angeordnete Kuppelplatte in der Draufsicht,
Fig. 9 eine Bodenplatte mit Schieber und Betätigungselement des Anbauschleuderstreuers gemäß Fig. 1 in der Draufsicht,
Fig.10 ein drittes ausführungsbeispiel eines erfindungsgemäßen Anbauschleuderstreuers in der Draufsicht,
Fig. 11 eine an den Vorratsbehälter des Schleuderstreuers gemäß Fig. 10 befestigte Kuppelplatte in der Draufsicht, und
Fig. 12 eine Bodenplatte mit Schieber und Betätigungselement des Schleuderstreuers gemäß Fig. 10 in der Draufsicht.

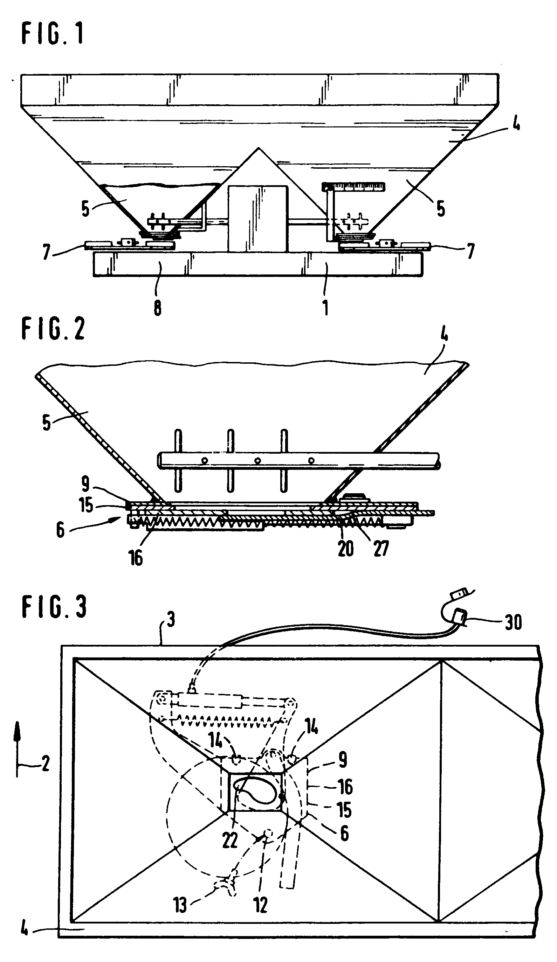

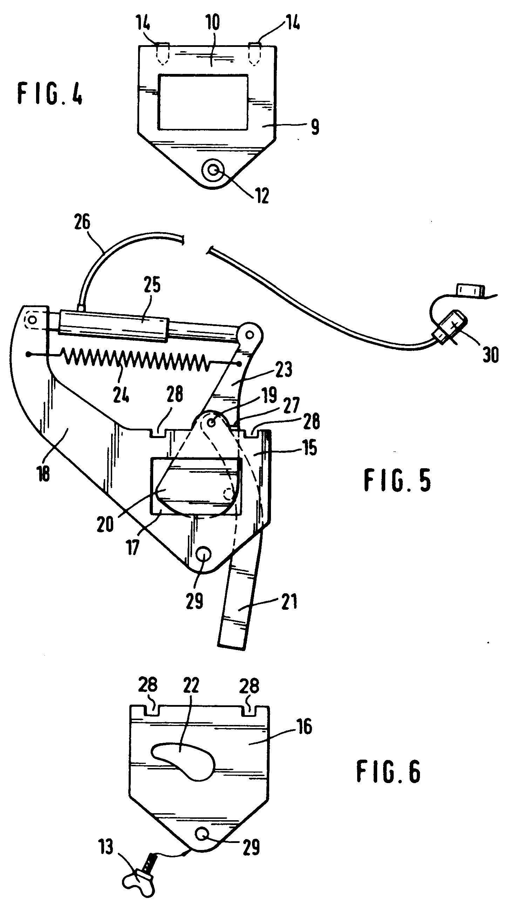

Der in den Figuren 1 bis 6 dargestellte Anbauschleuderstreuer weist einen Rahmen 1 auf, der auf seiner in Fahrtrichtung 2 vorlaufend angeordneten Seite 3 mit Dreipunktkupplungselementen zum Anbau an einen nicht dargestellten Schlepper ausgerüstet ist. Ferner ist am Rahmen 1 ein Vorratsbehälter 4 befestigt, der zwei durch ein dachförmiges Mittelteil getrennte trichterförmige Behälterteile 5 aufweist. An der Unterseite jedes Behälterteils 5 ist eine Kuppelplatte 9 mit einer in etwa den Abmessungen der Trichteröffnung des Behälterteils 5 entsprechenden Durchtrittsöffnung 10 angeschweißt. An jeder Kuppelplatte 9 ist mittels einer Verbindungseinrichtung eine Bodenplatte 6 mit einer Auslauföffnung lösbar befestigt. Unterhalb jeder Bodenplatte 6 ist eine als Schleuderscheibe 7 ausgebildete Streueinrichtung angeordnet, die über ein Getriebe 8 von der Schlepperzapfwelle rotierend angetrieben wird. Das im Vorratsbehälter 4 befindliche Saatgut fällt durch die Durchtrittsöffnungen 10 und die Auslauföffnungen auf die Schleuderscheiben 7, von denen aus es durch Abschleudern ausgestreut wird.

Die Bodenplatte 6 besteht aus einer Tragplatte 15 mit einer Durchlaßöffnung 17 und einer darunter angeordneten Abdeckplatte 16 mit einer Auslaßöffnung 22. Die Durchlaß- und die Auslaßöffnung 17, 22 stellen die Auslauföffnung der Bodenplatte 6 dar und sind beide auf die Durchtrittsöffnung 10 in der Kuppelplatte 9 ausgerichtet. Letztere Öffnung und die Durchlaßöffnung 17 sind etwa deckungsgleich.

Die vorstehend erwähnte Verbindungseinrichtung besteht aus einer Halterungsanordnung und einer Sicherungsanordnung. Die Halterungsanordnung besteht aus zwei Krallen 14, die auf der Seite 3 des Vorratsbehälters 4, die wegen der dort angeordneten Dreipunktkupplungselemente beim Anbau an einen Schlepper nur schwer zugänglich ist, mit gegenseitigem Abstand an der Kuppelplatte 9 ausgebildet sind und die Tragplatte 15 und die Abdeckplatte 16 an deren jeweiligen Rand umgreifen. Beide Platten 15 und 16 weisen Aussparungen 28 auf, in die die Krallen 14 eingreifen und somit ein Verschieben der Platten verhindern.

Die Sicherungsanordnung besteht aus einer Flügelschraube 13, die je eine Bohrung 29 in der Tragplatte 15 und der Abdeckplatte 16 auf der der Seite 3 des Vorratsbehälters 4 gegenüberliegenden, beim Anbau an einen Schlepper frei zugänglichen Seite durchsetzt und in eine Gewindebohrung 12 in der Kuppelplatte 9 einschraubbar ist.

Die Halterungsanordnung kann deshalb auf der beim Anbau an den Schlepper schwer zugänglichen Vorderseite 3 des Vorratsbehälters 4 angeordnet sein, da sie infolge ihrer Ausbildung als den jeweiligen Rand der Trag- und Abdeckplatte 15, 16 umgreifende Krallen es ermöglicht, beide Platten 15, 16 an der gegenüberliegenden, frei zugänglichen Seite zu erfaßen und von dieser Seite her in die Krallen 14 einzuschieben oder aus diesen herauszuziehen. Im Gegensatz dazu ist die die Platten 15, 16 durchsetzende Flügelschraube 13 auf der gegenüberliegenden, frei zugänglichen Seite angeordnet, da sie vom Landwirt erfaßt werden muß, wenn er sie lösen oder einschrauben will.

Die Tragplatte 15 ist mit einem in Richtung zur Vorderseite 3 des Vorratsbehälters 4 ragenden Tragarm 18 versehen. Ein Schieber 20 und ein Anschlaghebel 21 zur Einstellung der Öffnungsweite der Auslaßöffnung 22 sind an der Tragplatte 15 auf deren Vorderseite über ein Gelenk 19 befestigt. Zwischen dem Tragarm 18 und einem den Schieber 20 in Richtung zur Vorderseite 3 des Vorratsbehälters 4 verlängernden Hebel 23 sind eine Zugfeder 24 und ein Betätigungselement in Form eines Hydraulikzylinders 25 angeordnet. Dieser ist über einen Hydraulikschlauch 26 an die Schlepperhydraulikanlage bzw. an ein Hydrauliksteuergerät angeschlossen. Der Schieber 20 ist hinter dem Gelenk 19 an der Stelle 27 durchgekröpft, so daß die Abdeckplatte 16 zwischen die Tragplatte 15 und den Schieber 20 eingeschoben werden kann.

Bei der Montage werden der aus nichtrostendem Stahl bestehende Schieber 20, der Anschlaghebel 21, die Zugfeder 24 und der Hydraulikzylinder 25 mit dem Hydraulikschlauch 26 an die Tragplatte 15 montiert. Sodann wird die Vorderseite der Tragplatte 15 mit den Aussparungen 28 in die Halterungsanordnung 14 eingeschoben und anschließend die ebenfalls aus nicht rostendem Stahl hergestellte Abdeckplatte 16 zwischen die Tragplatte 15 und den Schieber 20 geschoben, so daß sie ebenfalls auf ihrer die Aussparungen 28 aufweisenden Vorderseite von den Krallen 14 gehalten wird. Zum Schluß wird die einen Schnellverschluß darstellende Flügelschraube 13 durch die Bohrungen 29 in der Tragplatte 15 und der Abdeckplatte 16 gesteckt und in die Gewindebohrung 12 in der Kuppelplatte 9 eingeschraubt.

Bei der Demontage kann nach dem bequemen Herausschrauben der leicht zugänglichen Flügelschraube 13 die aus Tragplatte 15 und Abdeckplatte 16 bestehende Bodenplatte 6 mit dem Schieber 20, dem Anschlaghebel 21 und dem Hydraulikzylinder 25 einschließlich dem Hydraulikschlauch 26 und der Schlauchkupplung 30 nach Lösen derselben durch einfaches Herausziehen aus den Krallen 14 vom Vorratsbehälter 4 abgenommen werden. Anschließend werden die Tragplatte 15 und die Abdeckplatte 16 voneinander getrennt, woraufhin beide in bequemer Weise gereinigt und eingefettet bzw. eingeölt werden können. Auch der Schieber 20 kann von der Tragplatte 15 zwecks Reinigung abgenommen werden. Die Lebensdauer sämtlicher Teile wird durch diese Maßnahmen verlängert und die Einstellgenauigkeit sowie das Verschließen der Auslauföffnung durch den Schieber bleiben erhalten.

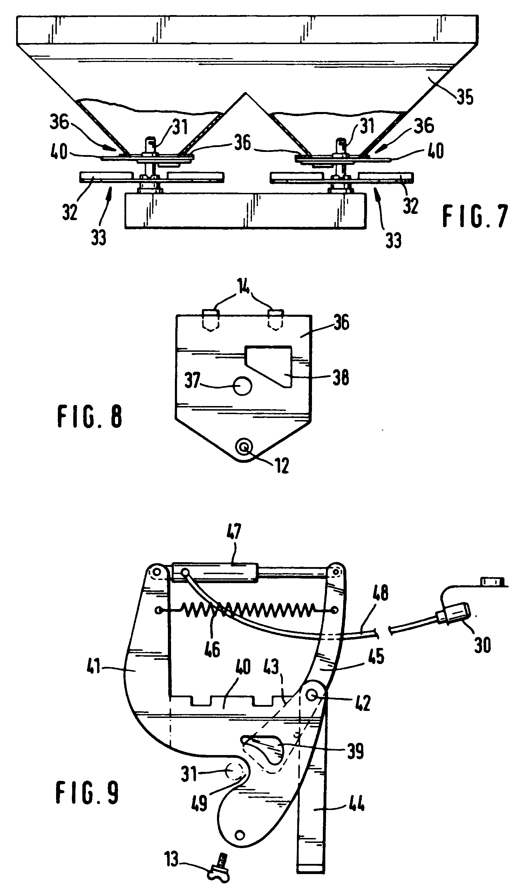

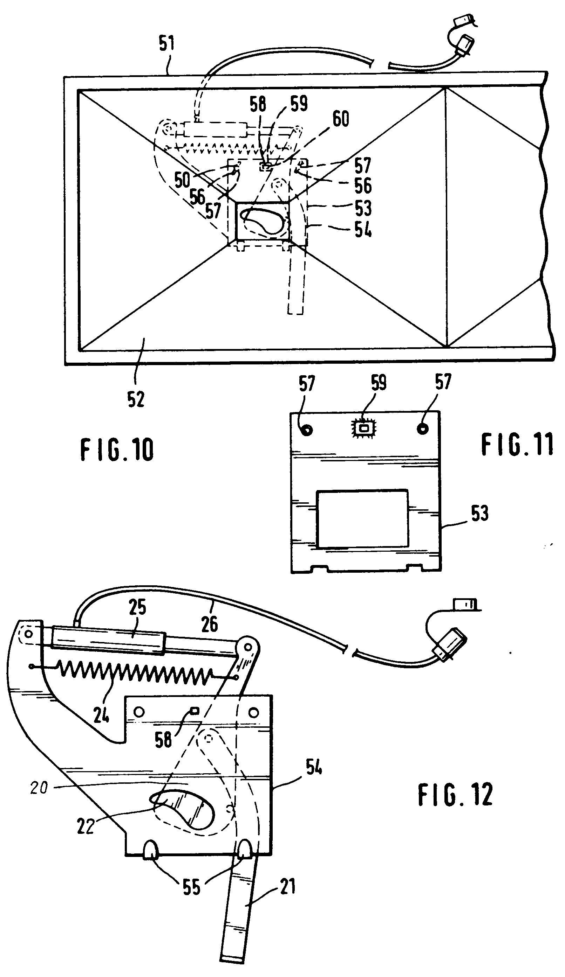

Der Anbauschleuderstreuer nach den Figuren 7 bis 9 ist prinzipiell wie der Schleuderstreuer gemäß den Figuren 1 bis 6 aufgebaut. Der wesentliche Unterschied besteht darin, daß ersterer Schleuderstreuer anstelle je einer zweiteilig, aus Trag- und Abdeckplatte bestehenden Bodenplatte 6 je eine einteilig ausgebildete Bodenplatte 40 aufweist, und daß je eine Antriebswelle 31 der Schleuderscheiben 32 der Streueinrichtung 33 durch die Bodenplatten 40 bis in den Vorratsbehälter 35 hineinragt. An jeder der durch das dachförmige Mittelteil getrennten Behälterhälften des Vorratsbehälters 35 ist die in Fig. 8 dargestellte Kuppelplatte 36 angeschweißt. Diese weist auf ihrer dem Schlepper zugewandten Vorderseite die Krallen 14 und auf ihrer Rückseite die Gewindebohrung 12 auf. Weiterhin befindet sich in der Mitte der Kuppelplatte 36 eine Bohrung 37 zur Durchführung der jeweiligen Antriebswelle 31. Außerdem ist neben der Bohrung 37 noch eine Durchtrittsöffnung 38 angeordnet, die größer ist als die Auslauföffnung 39 in der in Fig. 9 dargestellten Bodenplatte, so daß sie den gesamten Querschnitt der letzteren Öffnung freigibt. Unterhalb jeder Kuppelplatte 36 ist an dieser die aus nicht rostendem Stahl hergestellte Bodenplatte 40 in gleicher Weise wie die Tragplatte 15 des Anbauschleuderstreuers nach den Fig. 1 bis 6 mittels der Krallen 14 und der Flügelschraube 13 lösbar befestigt. Jede Bodenplatte 40 weist den nach vorn ragenden Tragarm 41 auf. An jeder Bodenplatte 40 sind mittels des jeweiligen Gelenkes 42 der aus nicht rostendem Stahl hergestellte Schieber 43 und der Anschlaghebel 44 angelenkt. Zwischen dem Tragarm 41 und dem Schieberhebel 45 ist die Zugfeder 46 und das als Hydraulikzylinder 47 ausgebildete Betätigungselement mit dem Hydraulikschlauch 48 befestigt. Jede Bodenplatte 40 weist einen seitlich offenen Ausschnitt 49 auf, in dessen Bereich sich die Antriebswelle 31 der Streueinrichtung 33 bei montierter Bodenplatte 40 befindet; d.h. die Bodenplatte 40 kann somit ohne Demontage des Vorratsbehälters 35 oder der Antriebswelle 31 an den Vorratsbehälter 35 angebracht bzw. von ihm abgenommen werden.

Bei der Montage werden zunächst der Schieber 43, der Anschlaghebel 44, die Zugfeder 46 und der Hydraulikzylinder 47 mit dem Hydraulikschlauch 48 an die jeweilige Bodenplatte 40 montiert. Anschließend werden die Bodenplatten 40 unter die Kuppelplatten 36 in die Krallen 14 geschoben und mit den in die Gewindebohrungen 12 einzuschraubenden Flügelschrauben 13 befestigt. Somit erfolgt die Befestigung der Bodenplatten 40 mit sämtlichen angebauten Teilen an dem Vorratsbehälter 35 in einfachster Weise. Die Bodenplatten 40 können nach Lösen der Flügelschrauben 13 einfach vom Vorratsbehälter 35 durch Herausziehen aus den Krallen 14 abgenommen und gereinigt sowie eingefettet werden. Die gleichen Vorteile ergeben sich, wenn Teile der Bodenplatte 40, wie beispielsweise der Hydraulikzylinder 47, oder die Bodenplatte selbst ausgetauscht werden müssen. Hierbei ist der jeweilige Hydraulikschlauch 40 so am Schleuderstreuer verlegt, daß er in einfachster Weise zusammen mit der Bodenplatte 40 und dem Hydraulikzylinder 47 vom Schleuderstreuer abgenommen werden kann.

Der Tragarm 41 kann aus einfachem Stahl hergestellt sein und entlang der in Fig. 9 strichpunktierten Linie an die aus nicht rostendem Stahl bestehende Bodenplatte 40 angeschweißt sein.

Der in den Fig. 10 bis 12 dargestellte Anbauschleuderstreuer ist prinzipiell wie der Schleuderstreuer nach den Fig. 7 bis 9 aufgebaut. Der wesentliche Unterschied besteht darin, daß die Sicherungsanordungen für beide Bodenplatten 54 in Form jeweils zweier in Gewindelöcher 57 einzuschraubende Flugelschrauben 56 auf der dem Schlepper zugewandten Vorderseit 51 des Vorratsbehälters 52 und dementsprechend die Halterungsanordnungen in Form jeweils zweier Krallen 55 an der entgegengesetzten, d.h. der Rückseite des Vorratsbehälters 52 angeordnet sind. Diese Anordnung ist vorgesehen, wenn der Bereich zwischen Schlepper und Vorratsbehälter 52 ausreichend bequem zugänglich ist. Ein weiterer Unterschied besteht darin, daß die Krallen 55 an der jeweiligen Bodenplatte 54 ausgebildet sind und im montierten Zustand dieser Bodenplatten den Rand der jeweiligen, am Vorratsbehälter 52 festgeschweißten Kuppelplatte 53 umgreifen. Außerdem ist an der Bodenplatte 54 ein Zentrierstift 58 angeordnet, welcher als Zentrierelement 60 mit einem an der Kuppelplatte 53 angeschweißten Zentrierring 59 zwecks Zentrierung der Bodenplatte 54 zusammenwirkt. An der Bodenplatte 54 sind der Schieber 20, der Anschlaghebel 21, der Hydraulikzylinder 25 mit dem Hydraulikschlauch 26 und der Zugfeder 24 angeordnet, so daß diese Teile zusammen mit der Bodenplatte 54 in einfacher Weise vom Vorratsbehälter 52 abgenommen werden können.

Die Montage bei dem Hersteller geht folgendermaßen vor sich: Zunächst wird die Bodenplatte 54 mittels der aus Krallen 55 und Flügelschrauben 56 bestehenden Verbindungseinrichtung mit der Kuppelplatte 53, bevor diese an den Vorratsbehälter 52 angeschweißt wird, verbunden. Nachdem die Kuppelplatte 53 und die Bodenplatte 54 genau zueinander eingerichtet worden sind, wird der Zentrierring 59 auf die Bodenplatte 53 gelegt und auf den in einer genau definierten Position fest mit der Bodenplatte 54 verbundenen Zentrierstift 58 aufgestekt. Anschließend wird der Zentrierring 59 mit der Kuppelplatte 53 verschweißt. Zum Schluß wird die Kuppelplatte 53 zu dem Vorratsbehälter 52 bzw. der Streueinrichtung des Schleuderstreuers genau eingerichtet und an den Vorratsbehälter 52 angeschweißt.

Jetzt kann später diese oder jede andere Bodenplatte oder Bodenplatten-Dosiereinheit leicht und bequem ohne aufwendige Einstell- und Einrichtarbeiten ein- bzw. ausgebaut werden. Ein Verschieben der Dosier- und Baueinheit gegenüber der Streueinrichtung ist ausgeschlossen.

## Patentansprüche

1. Verfahren zur Herstellung eines Anbauschleuderstreuers, insbesondere für gekörnte Düngemittel, mit einem trichterförmigen Vorratsbehälter (4, 35, 52), der wenigstens eine Bodenplatte (6, 40, 54) mit einer Auslauföffnung (22), einen zugeordneten Schieber (20, 43) zum Einstellen der Öffnungsweite der Auslauföffnung und ein zugeordnetes Betätigungselement (25, 47) für den Schieber aufweist, wobei die Bodenplatte, der Schieber und das Betätigungselement eine Dosier- und Baueinheit bilden, die über die Bodenplatte mittels einer Verbindungseinrichtung (13, 14) lösbar am Vorratsbehälter befestigt ist, und wobei ferner unterhalb der Bodenplatte eine antreibbare Streueinrichtung (333) angeordnet ist, dadurch gekennzeichnet, daß die in ihrer Gesamtheit am Vorratsbehälter leicht lösbar, leicht abnehmbar und leicht wieder anbringbar anordenbare Dosier- und Baueinheit gegenüber dem Vorratsbehälter ausgerichtet wird und daß dann ein zwischen Dosier- und Baueinheit und dem Vorratsbehälter wirkendes Zentrierelement (60) derart ausgerichtet und fixiert wird , daß dann diese ausgerichtet gegenseitige Lage automatisch beim Anbau nur einer Abnahme eingenommen wird.

2. Anbauschleuderstreuer insbesondere für gekörnte Düngemittel mit einem trichterförmigen Vorratsbehälter, der wenigstens eine Bodenplatte mit einer Auslauföffnung, einen zugeordneten Schieber zum Einstellen der öffnungsweite der Auslauföffnung und ein zugeordnetes Betätigsungselement für den Schieber aufweist, wobei die Bodenplatte, der Schieber und das Betätigungselement eine Dosier- und Baueinheit bilden, die über die Bodenplatte mittels einer Verbindungseinrichtung lösbar am Vorratsbehälter befestigt ist, und wobei ferner unterhalb der Bodenplatte eine antreibbare Streueinrichtung angeordnet ist, und der streuer mit einer in den Vorratsbehälter hineinragenden Antreibswelle der Streueinrichtung versehen ist, dadurch gekennzeichnet, daß die Dosier- und Baueinheit (6, 40, 54, 20, 43, 25, 47) in ihrer Gesamtheit leicht lösbar, leicht abnehmbar und leicht wieder anbringbar am Vorratsbehälter (4, 35, 52) befestigt ist, indem die Bodenplatte (40) einen seitlich offenen Ausschnitt (49) für die Antriebswelle (31) der Streueinrichtung (33) aufweist.

## Claims

1. Method of manufacturing an attachable centrifugal broadcaster, more especially for granular fertilizers, including a funnel-shaped hopper (4, 35, 52), which has at least one base plate (6, 40, 54) provided with an outlet aperture (22), an associated slide member (20, 43) for setting the aperture width of the outlet aperture, and an associated actuating means (25, 47) for actuating the slide member, wherein the base plate, the slide member and the actuating means form a metering structural unit which is detachably mounted on the hopper via the intermediary of the base plate by means of a connecting arrangement (13, 14), and wherein also a drivable broadcasting arrangement (33) is disposed beneath the base plate, characterised in that the metering and constructive unit, which in its entirety may be disposed on the hopper in an easily-releasable, easily removable and easily-replaceable manner, is aligned relative to the hopper, and in that this mutually-aligned position a centring member (60), acting between the metering and constructive unit and the hopper, is then aligned and secured in such a way that this mutually-aligned position is adopted automatically when the unit is remounted after removal.

2. Attachable centrifugal broadcaster, more especially for granular fertilizers, including a funnel-shaped hopper which has at least one base plate provided with an outlet aperture, an associated slide member for setting the aperture width of the outlet aperture, and an associated actuating means for actuating the slide member, wherein the base plate, the slide member and the actuating means form a metering structural unit which is detachably mounted on the hopper via the intermediary of the base plate by means of a connecting arrangement, and wherein also a drivable control arrangement is disposed beneath the base plate, and the broadcaster is provided with a drive shaft which protrudes into the hopper for driving the broadcasting arrangement, characterised in that the metering structural arrangement (6, 40, 54, 20, 43, 25, 47) is mounted on the hopper (4, 35, 52) so as to be easily detachable therefrom in its entirety, so as to be easily removable therefrom and so as to be easily reattachable thereto, the base plate (40) having a laterally open cutaway portion (49) for accommodating the drive shaft (31) of the broadcasting arrangement (33).

## Revendications

1. Distributeur centrifuge à disques, porté, notamment pour des engrais à l'état de granulés, comportant un réservoir (4, 35, 52) en forme de trémie, muni d'au moins une plaque de fond (6, 40, 54) ayant un orifice de sortie (22), auquel est associé un coulisseau (20, 43) pour régler l'ouverture de l'orifice de sortie et un élément de manoeuvre (25, 47) associé au coulisseau, la plaque de fond, le coulisseau et l'élément de manoeuvre formant un ensemble constructif de dosage qui est fixé de manière amovible au réservoir par la plaque de fond par l'intermédiaire d'un dispositif de liaison (13, 14), un dispositif d'épandage (33), entraîné, étant fixé en outre sous la plaque de fond, distributeur caractérisé en ce que l'unité constructive de dosage montée de manière facilement détachable, facilement amovible et facile à réinstaller dans sa totalité est alignée par rapport au réservoir d'alimentation et en ce qu'un élément de centrage (60) agissant entre l'unité constructive de dosage et le réservoir d'alimentation est aligné et bloqué pour qu'alors cette position alignée réciproquement soit reprise lors d'une réinstallation après le démontage.

2. Distributeur centrifuge à disque porté notamment pour des engrais à l'état de granulés, comportant un réservoir en forme de trémie qui est muni d'au moins une plaque de fond ayant un orifice de sortie auquel est associé un coulisseau pour régler l'ouverture de l'orifice de sortie et un élément de manoeuvre pour le coulisseau, la plaque de fond, le coulisseau et l'élément de manoeuvre formant une unité constructive de dosage fixée de manière amovible au réservoir par l'intermédiaire de la plaque de fond à l'aide d'un dispositif de liaison, un dispositif de commande susceptible d'être entraîné étant prévu en-dessous de la plaque de fond et le distributeur comportant un arbre d'entraînement du dispositif d'épandage qui traverse le réservoir, caractérisé en ce que l'unité constructive de dosage (6, 40, 54, 20, 43, 25, 47) est facile à démonter dans sa totalité, facile à enlever et facile à fixer de nouveau au réservoir (4, 35, 52) du fait que la plaque de fond (40) comporte une découpe (49) ouverte latéralement pour l'arbre moteur (31) du dispositif d'épandage (33).
